# EUROPÄISCHE PATENTANMELDUNG

(11) **EP 3 903 979 A1**
(43) Veröffentlichungstag der Anmeldung: **03.11.2021**
(21) Anmeldenummer: 21171498.5
(22) Anmeldetag: 30.04.2021
(51) Int. Cl.: B23F 21/00, B23F 5/16, B23F 17/00, B23F 19/00

(54) **VERFAHREN ZUM BEARBEITEN DES KOPFKREISDURCHMESSERS UND KOMBINATIONSWERKZEUG ZUM ERZEUGEN EINES ZAHNRADS**

(30) Priorität: 30.04.2020 DE 102020111838
(71) Anmelder: Präwema Antriebstechnik GmbH, 37269 Eschwege/Werra (DE)
(72) Erfinder: SCHIEKE, Jörg, 99092 Erfurt-Marbach (DE); REINHARDT, Jörg, 99826 Berka v.d.H (DE)
(74) Vertreter: Cohausz & Florack

(57) **Zusammenfassung**

Die Erfindung betrifft ein Verfahren zum Bearbeiten des Kopfkreisdurchmessers einer Verzahnung (4) eines Zahnrads (6), bei dem das Zahnrad (6) um eine Werkstückdrehachse (Rw) rotiert und bei dem mindestens ein Zahn (9) der Verzahnung (4) mittels eines Werkzeugs (7,7') spanabhebend bearbeitet wird, das um eine in einem Achsabstand (A',A") zur Werkstückdrehachse (Rw) ausgerichtete Werkzeugdrehachse (Rz) rotiert. Erfindungsgemäß ist das Werkzeug (7,7') scheibenförmig, bearbeitet das scheibenförmige Werkzeug (7,7') mindestens mit einem als definierte Schneide (10) ausgebildeten Teilsegment (10a) seiner Umfangskante die Kopffläche (8) des Zahns (9) spanabhebend, wird während der spanabhebenden Bearbeitung eine in axialer Richtung der Verzahnung (4) ausgerichtete Relativbewegung zwischen Werkzeug (7,7') und Zahnrad (6) ausgeführt, in Folge derer das Werkzeug (7,7') die Kopffläche (8) überstreicht, und ist die Werkzeugdrehachse (Rz) in Bezug auf die Werkstückdrehachse (Rw) unter einem Achskreuzwinkel (Σ") ausgerichtet, der 5° bis 40° beträgt. Auf diese Weise ist eine effiziente und hoch präzise Bearbeitung des Kopfkreisdurchmessers ermöglicht. Die Erfindung nennt auch ein Verfahren zur Herstellung eines Zahnrads, bei dem vor der erfindungsgemäßen Bearbeitung des Kopfkreisdurchmessers durch Wälzschälen die Verzahnung (4) an einem Zahnradrohling (5) erzeugt wird, sowie ein Kombinationswerkzeug, bei dem ein Wälzschälrad für die Erzeugung des Zahnrads und ein scheibenförmiges Werkzeug zur erfindungsgemäßen Bearbeitung des Kopfkreisdurchmessers miteinander kombiniert sind.

## Beschreibung

Die Erfindung betrifft ein Verfahren zum Bearbeiten des Kopfkreisdurchmessers der Verzahnung eines Zahnrads, bei dem ein mit der Verzahnung versehenes Zahnrad um eine Werkstückdrehachse rotierend angetrieben wird und bei dem mindestens ein Zahn der Verzahnung des Zahnrads mittels eines Werkzeugs spanabhebend bearbeitet wird, das um eine in einem Achsabstand zur Werkstückdrehachse ausgerichtete Werkzeugdrehachse rotiert.

Ein Verfahren dieser Art ist aus der DE 10 2015 104 242 A1 bekannt. Bei dem bekannten Verfahren wird ein Kombinationswerkzeug verwendet, bei dem ein Zahnbearbeitungswerkzeug und ein Schälrad fest miteinander verbunden sind. Das Kombinationswerkzeug ist in einer Werkzeugspindel eingespannt und rotiert während der Bearbeitung um eine Werkzeugdrehachse. In einem ersten Schritt wird mit dem Schälrad des Kombinationswerkzeugs in einen von einer Werkstückspindel im Synchronlauf zum Werkzeug drehangetriebenen Zahnradrohling durch Wälzschälen eine Verzahnung eingebracht, indem die Werkstückspindel und die Werkzeugspindel in einem Achskreuzwinkel zueinander stehen und der Vorschub in Richtung der Zahnflankenerstreckung erfolgt. In einem zweiten Schritt werden mit dem Zahnbearbeitungswerkzeug zumindest einige Zähne der Verzahnung des zuvor aus dem Rohling erzeugten Zahnrads spanabtragend bearbeitet. Die beiden Bearbeitungen erfolgen dabei in einer Aufspannung. Somit bleiben das Kombiwerkzeug in der Werkzeugspindel und das Werkrad in der Werkstückspindel eingespannt. Lediglich die Relativposition der Werkzeugspindel in Bezug auf die Werkstückspindel und das Drehzahlverhältnis der beiden Spindeln werden an die jeweilige Bearbeitungsoperation angepasst. Als Beispiele für die im zweiten Schritt des bekannten Verfahrens erfolgende Zahnbearbeitung sind in der DE 10 2015 104 242 A1 die Herstellung von Hinterlegungen oder Rastnuten sowie allgemein Fräs- oder Bohr-Bearbeitungen erwähnt.

Eine umfassende Darstellung der Einflussgrößen, die bei der Erzeugung und Bearbeitung von Zahnrädern durch Wälzschälen zu berücksichtigen sind, findet sich in der EP 2 520 391 A1. In dieser Veröffentlichung sind ein Verfahren und eine Vorrichtung zum Wälzschälen eines Werkstücks mit rotationssymmetrischer, periodischer Struktur unter Einsatz eines Wälzschälwerkzeugs beschrieben. Gemäß diesem Stand der Technik wird beim Wälzschälen eine gekoppelte Relativbewegung des Wälzschälwerkzeugs im Bezug zu dem Werkstück ausgeführt. Dabei wird das Wälzschälwerkzeug um eine erste Rotationsachse gedreht, während das Werkstück um eine zweite Rotationsachse gedreht wird. Werkzeug und Werkstück drehen dabei vorzugsweise gegenläufig, d.h. die Drehrichtung des Wälzschälwerkzeugs ist entgegen der Drehrichtung des Werkstücks gerichtet. Gleichzeitig ist während des Wälzschälens ein Neigungswinkel eingestellt, der betragsmäßig grösser ist als 15 Grad, und die erste Rotationsachse windschief in Bezug auf die zweite Rotationsachse ausgerichtet.

Eine insbesondere bei Zahnrädern, bei denen eine Profilverschiebung vorgenommen worden ist, wichtige Bearbeitungsoperation ist die Bearbeitung des Kopfkreisdurchmessers. Diese wird durchgeführt, um den Zähnen eines Zahnrads im Bereich ihres Zahnkopfes eine ausreichende Breite zu verleihen und auf diese Weise ein Ausbrechen des Zahnmaterials in Folge von andernfalls möglicherweise auftretender lokaler Belastung zu verhindern. Die Bearbeitung des Kopfkreisdurchmessers wird in der Praxis üblicherweise als Drehbearbeitung durchgeführt. Hierzu werden die Zahnräder in der heutigen betrieblichen Praxis, nachdem sie entsprechend den voranstehend erläuterten Beispielen des Standes der Technik durch Wälzschälen aus einem Zahnradrohling geformt worden sind, üblicherweise einer Drehbearbeitung unterzogen.

Vor dem Hintergrund des voranstehend erläuterten Standes der Technik hat sich die Aufgabe gestellt, ein Verfahren anzugeben, mit dem sich effizient und hoch präzise der Kopfkreisdurchmesser eines Zahnrads bearbeiten lässt.

Ebenso sollte ein Werkzeug zur Erzeugung eines Zahnrads geschaffen werden, mit dem sich eine solcherart genaue und effiziente Herstellung eines Zahnrads bewerkstelligen lässt.

Die Erfindung hat diese Aufgabe durch das in Anspruch 1 angegebene Verfahren gelöst.

Ein Werkzeug, welches die voranstehend genannte Aufgabe gemäß der Erfindung löst, ist in Anspruch 14 angegeben.

Vorteilhafte Ausgestaltungen der Erfindung sind in den abhängigen Ansprüchen angegeben und werden wie der allgemeine Erfindungsgedanke nachfolgend im Einzelnen erläutert.

Bei einem erfindungsgemäßen Verfahren zum Bearbeiten des Kopfkreisdurchmessers einer Verzahnung eines Zahnrads wird somit in Übereinstimmung mit dem eingangs erläuterten Stand der Technik das mit der Verzahnung versehene Zahnrad um eine Werkstückdrehachse rotierend angetrieben und mindestens ein Zahn der Verzahnung des Zahnrads mittels eines Werkzeugs spanabhebend bearbeitet, das um eine in einem Achsabstand zur Werkstückdrehachse ausgerichtete Werkzeugdrehachse rotiert.

Erfindungsgemäß ist nun das Werkzeug scheibenförmig, wobei das scheibenförmige Werkzeug mindestens mit einem als definierte Schneide ausgebildeten Teilsegment seiner Umfangskante die Kopffläche des jeweils zu bearbeitenden Zahns spanabhebend bearbeitet, wobei während der spanabhebenden Bearbeitung eine in axialer Richtung der Verzahnung ausgerichtete Relativbewegung zwischen dem Werkzeug und dem Zahnrad ausgeführt wird, in Folge derer das Werkzeug die zu bearbeitende Kopffläche überstreicht, und wobei die Werkzeugdrehachse in Bezug auf die Werkstückdrehachse unter einem Achskreuzwinkel ausgerichtet ist, der 5° bis 40° beträgt.

Die Erfindung geht hier von der Erkenntnis aus, dass es mittels eines scheibenförmigen Werkzeugs, das nach Art des Wälzschälens unter einem bestimmten Achskreuzwinkel spanabhebend in Eingriff mit der für die gewünschten Änderungen des Kopfkreisdurchmessers entscheidenden Kopffläche des jeweils zu bearbeitenden Zahn gebracht wird, zeitsparend und mit hoher Fertigungsgenauigkeit möglich ist, den Kopfkreisdurchmesser eines Zahnrads zu bearbeiten.

Das erfindungsgemäß eingesetzte scheibenförmige Werkzeug trägt beim erfindungsgemäßen Verfahren mit der an seinem Umfang jeweils ausgebildeten definierten Schneide in Folge der Relativbewegung von Werkstück und Werkzeug Material von der Kopffläche des betreffenden Zahns ab. Der Materialabtrag beginnt dabei ausgehend von einer Ausgangsposition, in der die Werkzeugschneide in das Material des Zahns eintaucht, und endet entsprechend der axialen Relativverschiebung, die Werkzeug und Zahnrad während eines Bearbeitungsdurchlaufs erfahren, an einer Endposition, an der das Werkzeug wieder aus dem Material des Zahns austritt.

Die während der spanabhebenden Bewegung ausgeführte Relativbewegung zwischen dem Zahnrad und dem scheibenförmigen Werkzeug kann dadurch bewirkt werden, dass das scheibenförmige Werkzeug längs seiner Werkzeugdrehachse axial von einer Ausgangsposition, die einer ersten Stirnfläche des Zahnrads zugeordnet ist, in Richtung der zweiten Stirnfläche des Zahnrads bewegt wird. Alternativ kann die während der spanabhebenden Bewegung ausgeführte Relativbewegung zwischen dem Zahnrad und dem scheibenförmigen Werkzeug auch dadurch bewirkt werden, dass das Zahnrad längs seiner Werkstückdrehachse axial von einer Ausgangsposition, die einer ersten Stirnfläche des scheibenförmigen Werkzeugs zugeordnet ist, in Richtung der zweiten Stirnfläche des scheibenförmigen Werkzeugs bewegt wird. Dabei ist es selbstverständlich auch möglich, dass sowohl das Zahnrad entlang seiner Werkstückdrehachse, als auch das scheibenförmige Werkzeug entlang seiner Werkzeugdrehachse bewegt werden. Abhängig von den in der jeweiligen Maschine zur Verfügung stehenden Bewegungsachsen kann es sich dabei aus maschinentechnischer Sicht als besonders günstig erweisen, wenn das Zahnrad in Achsrichtung seiner Drehachse bewegt wird, während das Werkzeug keine Axialbewegung durchführt. Dies erweist sich insbesondere dann als vorteilhaft, wenn es sich bei dem zu bearbeitenden Zahnrad um ein innenverzahntes Rad handelt, dass in einer stabilen, in axialer Richtung der Werkstückdrehachse verfahrbaren Werkstückaufnahme gehalten ist.

Die Erfindung nutzt somit die Kinematik des Wälzschälens, setzt dazu aber kein an die Gestalt der Verzahnung angepasstes, sondern ein scheibenförmiges Werkzeug ein, das einen flächigen, spanabhebenden Materialabtrag an der Kopffläche des jeweils zu bearbeitenden Zahns ermöglicht.

Der erfindungsgemäß an dem jeweils bearbeiteten Zahn erzielte Materialabtrag ist abhängig vom Achskreuzwinkel. Hier sieht die Erfindung einen Achskreuzwinkel von mindestens 5° vor. Dabei haben sich Achskreuzwinkel von mindestens 10° aus fertigungstechnischer Sicht in der Praxis besonders bewährt. Gleichzeitig werden dadurch, dass der Achskreuzwinkel erfindungsgemäß auf höchstens 40° beschränkt ist, Überlastungen des scheibenförmigen Werkzeugs im Bereich der Schneide, die an seiner Umfangskante ausgebildet ist, vermieden. Besonders sicher lässt sich dies dadurch vermeiden, dass der Achskreuzwinkel auf höchstes 35° beschränkt wird.

Sollen alle Zähne des zu bearbeitenden Zahnrads gleichmäßig bearbeitet werden, kann in erfindungsgemäßer Weise ein scheibenförmiges Werkzeug eingesetzt werden, dessen den spanabhebenden Materialabtrag bewirkende Umfangskante über ihre gesamte Umfangslänge als definierte Schneide ausgebildet ist.

Sollen dagegen nur bestimmte Zähne an ihrer Kopffläche bearbeitet werden, so können um den Umfang der Umfangskante in gleichen Winkelabständen verteilt jeweils als definierte Schneide ausgebildete Teilsegmente der Umfangskante angeordnet sein. Hier erweist es sich als grundsätzlich möglich, auch ein konventionell geformtes Wälzschälrad, welches üblicherweise zur Erzeugung einer Verzahnung eingesetzt wird, zur erfindungsgemäßen Bearbeitung des Kopfkreisdurchmessers einzusetzen.

Die Schneidleistung, die bei der erfindungsgemäßen Bearbeitung des Kopfkreisdurchmessers erzielt wird, kann auch durch die Einstellung eines bestimmten Drehzahlverhältnisses Wz/Ww beeinflusst werden, dass durch Division der Drehzahl Wz des Werkzeugs durch die Drehzahl Ww des Werkstücks gebildet wird. Hier haben sich insbesondere für die Bearbeitung von Innenverzahnungen Drehzahlverhältnisse Wz/Ww von 1,1 bis 10 als praxisgerecht erwiesen. Optimierte Abtragsleistungen lassen sich erreichen bei einem Drehzahlverhältnis, das 1,1 bis 5 beträgt.

Bei geeigneter Wahl des Drehzahlverhältnisses kann die Wälzschälbearbeitung des Kopfkreisdurchmessers im Gleichlauf von Werkstück und Werkzeug erfolgen. Beim Gleichlaufwälzschälen dreht das Wälzschälwerkzeug um eine erste Rotationsachse und das Werkstück drehzahlgekoppelt an die Drehung des Werkzeugs um eine zweite Rotationsachse. Gleichzeitig wird eine in axialer Richtung ausgerichtete Relativbewegung von Wälzschälwerkzeug und Werkstück ausgeführt. Hierzu kann das Wälzschälwerkzeug axial längs seiner Werkzeugdrehachse relativ zum Werkstück und/oder das Werkstück längs seiner Werkstückdrehachse relativ zum Werkzeug bewegt werden, wobei die beiden Rotationsachsen während des Wälzschälens mit einem Achskreuzwinkel windschief relativ zueinander angestellt sind (s. EP 2 537 616 A1).

Als besonders zweckmäßig hat es sich herausgestellt, wenn die Wälzschälbearbeitung im Gegenlauf erfolgt, wenn also das Werkzeug und das Werkstück während der spanabhebenden Bearbeitung gegenläufig rotieren.

Das erfindungsgemäß eingesetzte scheibenförmige Werkzeug kann zumindest im Bereich seiner Schneidkante aus Hartmetall oder pulvermetallurgisch erzeugtem Schnellarbeitsstahl bestehen.

Um dem Werkzeug eine ausreichende Steifigkeit und Standfestigkeit zu verleihen, kann es mindestens eine Dicke Dz von 1 mm aufweisen, wobei sich Werkzeugdicken Dz von 2 - 6 mm in der Praxis als besonders zweckmäßig herausgestellt haben.

Als aus technologischer und praktischer Sicht besonders vorteilhaft erweist sich eine Variante der Erfindung, bei der die erfindungsgemäß durch Wälzschälen erfolgende Bearbeitung der Kopfflächen der Zähne einer Verzahnung mit der Erzeugung dieser Verzahnung an dem jeweiligen Zahnrad verkoppelt wird. Hierzu wird erfindungsgemäß in einem ersten Arbeitsschritt ein Zahnradrohling bereitgestellt, an dem mittels Wälzschälen die Verzahnung des Zahnrads erzeugt wird. Anschließend wird in einem zweiten Schritt die erfindungsgemäße Bearbeitung der Kopffläche des mindestens einen Zahnes der so erzeugten Verzahnung mittels des scheibenförmigen Werkzeugs zwecks Bearbeitung des Kopfkreisdurchmessers durchgeführt.

Als hinsichtlich der Qualität des Arbeitsergebnisses besonders günstig hat es sich bei der im voranstehenden Absatz erwähnten Variante der Erfindung herausgestellt, wenn das zum Erzeugen der Verzahnung des Zahnrads aus dem Zahnradrohling eingesetzte Wälzschälwerkzeug und zur spanabhebenden Bearbeitung der Kopffläche erfindungsgemäß eingesetzte scheibenförmige Werkzeug in Achsrichtung der Werkzeugdrehachse zueinander versetzt gemeinsam auf einer Werkzeugaufnahme befestigt sind, die beispielsweise nach Art einer Tragachse ausgebildet sein kann. Diese Anordnung erlaubt es, beide Bearbeitungsschritte in einer Aufspannung zu absolvieren. Die gemeinsame Anordnung der beiden Werkzeuge auf einer Werkzeugaufnahme ermöglicht so maximale Fertigungsgenauigkeiten, da ein Umspannen der Werkzeuge oder des Werkstücks zwischen den Arbeitsgängen und damit in der Praxis unvermeidbar einhergehende Lageabweichungen auf einfache Weise vermieden werden. Gleichzeitig erweist sich diese Ausgestaltung auch aus maschinentechnischer Sicht als besonders effektiv, weil für eine durch Wälzschälen erfolgende Erzeugung der Verzahnung an dem Zahnradrohling dieselben Bewegungs- und Stellachsen der Maschine benötigt werden wie bei dem erfindungsgemäß ebenfalls durch Wälzschälen, jedoch mit einem scheibenförmigen Werkzeug, Bearbeiten der Kopfflächen der Zähne des Zahnrads. Auf diese Weise lassen sich ohne zusätzlichen Aufwand Wälzschälbearbeitungen an dem Zahnradrohling mit einem Achskreuzwinkel durchführen, der an die jeweilige Bearbeitungsaufgabe optimal angepasst ist und sich von dem Achskreuzwinkel unterscheidet, mit dem die erfindungsgemäße Wälzschälbearbeitung der Kopfflächen der Zähne des zuvor aus dem Zahnradrohling erzeugten Zahnrads durchgeführt wird.

Den voranstehenden Erläuterungen entsprechend lassen sich mit einem Kombinationswerkzeug, bei dem erfindungsgemäß auf einer Werkzeugaufnahme in Achsrichtung der Werkzeugaufnahme zueinander beabstandet ein Wälzschälwerkzeug zur Erzeugung einer Verzahnung an einem Zahnradrohling und ein scheibenförmiges Werkzeug zur Bearbeitung der Kopffläche mindestens eines Zahns der mit dem Wälzschälwerkzeug erzeugten Verzahnung angeordnet sind, aus einem Zahnradrohling auf besonders einfache Weise Zahnräder erzeugen, deren Kopfkreisdurchmesser mit einem qualitativ optimierten Arbeitsergebnis gesondert bearbeitet worden sind.

Nachfolgend wird die Erfindung anhand einer ein Ausführungsbeispiel darstellenden Zeichnung näher erläutert. Es zeigen jeweils schematisch:

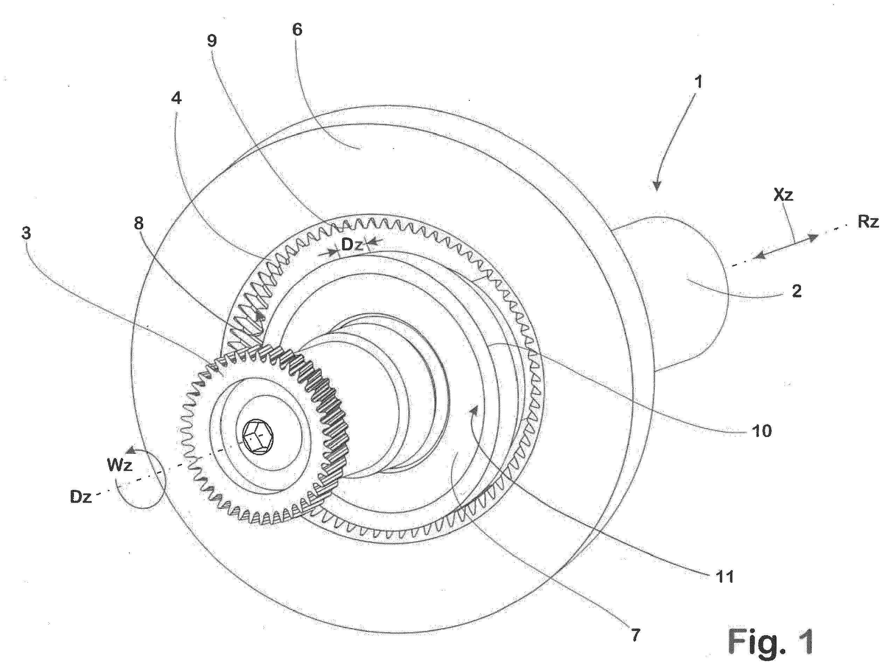

- Fig. 1: ein Kombinationswerkzeug zum Erzeugen einer Innenverzahnung an einem Zahnradrohling und anschließendem Bearbeiten des Kopfkreisdurchmessers der Innenverzahnung in perspektivischer Ansicht;
- Fig. 2: ein zahnradförmiges Wälzschälwerkzeug, das Teil des Kombinationswerkzeugs gemäß Fig. 1 ist, bei der Bearbeitung des Zahnradrohlings zur Erzeugung der Innenverzahnung in perspektivischer Ansicht, bei der die anderen Bestandteile des Kombinationswerkzeugs weggelassen worden sind;

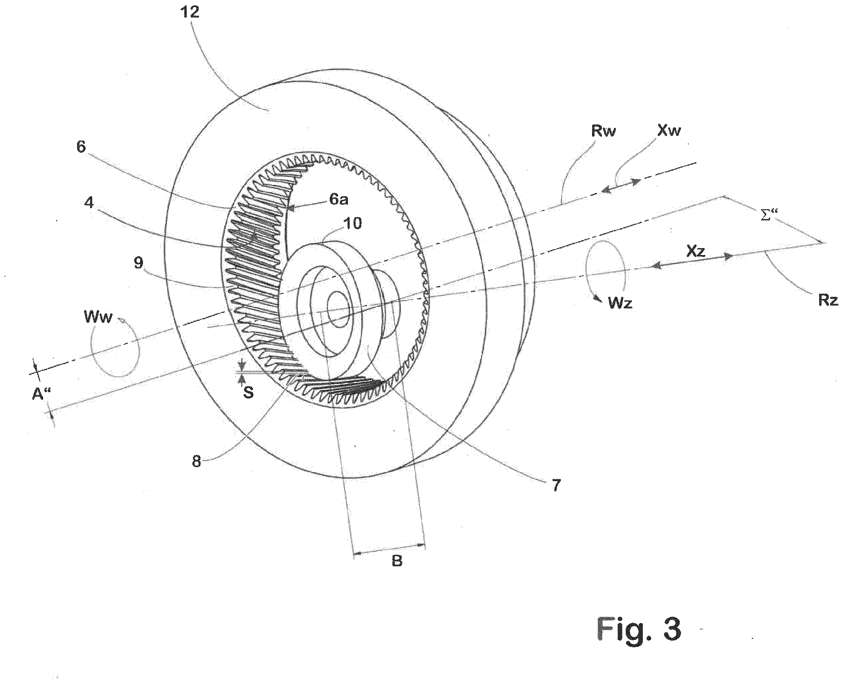

- Fig. 3: ein scheibenförmiges Werkzeug, das Teil des Kombinationswerkzeugs gemäß Fig. 1 ist, bei der Bearbeitung der Kopfflächen der Innenverzahnung in perspektivischer Ansicht, bei der die anderen Bestandteile des Kombinationswerkzeugs weggelassen worden sind;
- Fig. 4: eine alternative Ausgestaltung des scheibenförmigen Werkzeugs gemäß Fig. 3 in einer perspektivischen Ansicht.

Das Kombinationswerkzeug 1 umfasst eine nach Art einer Tragachse geformte Werkzeugaufnahme 2, die mit dem nicht dargestellten Drehantrieb einer ebenfalls nicht dargestellten konventionellen, für Wälzschälbearbeitungen ausgelegte Werkzeugmaschine verkoppelt und auf diese Weise um ihre Drehachse Rz mit einer Drehzahl Wz rotierend angetrieben ist.

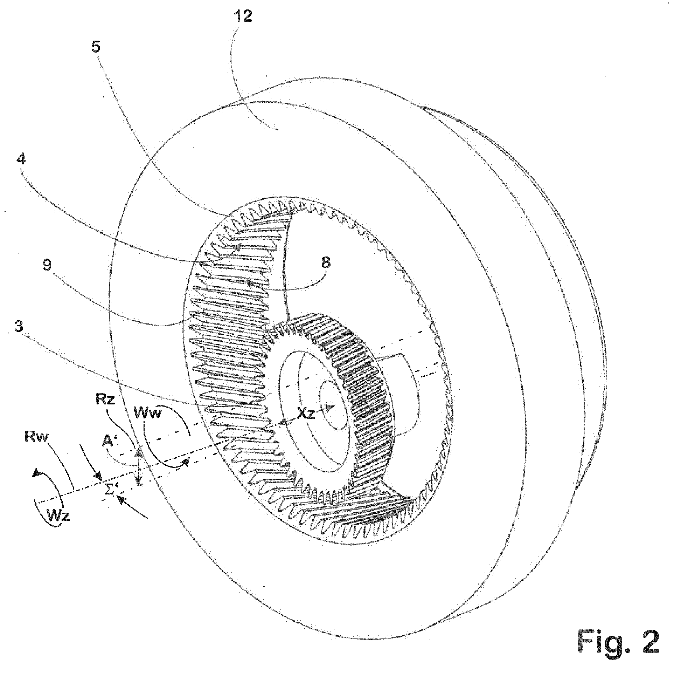

Die Werkzeugaufnahme 2 des Kombinationswerkzeugs 1 trägt an ihrem vorderen freien Ende ein zahnradförmiges Wälzschälrad 3, das in konventioneller Weise zur Erzeugung einer Innenverzahnung 4 an einem zunächst als Zahnradrohling 5 (Fig. 2) bereitgestellten Zahnrads 6 ausgelegt ist.

In Achsrichtung Xz der Werkzeugaufnahme 2 gegenüber dem Wälzschälrad 3 in Richtung der Einspannung der Werkzeugaufnahme 2 versetzt ist als weiteres Element des Kombinationswerkzeugs 1 auf der Werkzeugaufnahme 2 ein scheibenförmiges Werkzeug 7 befestigt, das koaxial zur Drehachse Rz der Werkzeugaufnahme 2 ausgerichtet ist und eine Dicke Dz von beispielsweise 6 mm aufweist.

Das scheibenförmige Werkzeug 7 dient zur Bearbeitung der Kopfflächen 8 der von dem Wälzschälrad 3 fertig erzeugten Zähne 9 der Innenverzahnung 4 des Zahnrads 6. Dazu hat das Werkzeug 7 eine definierte Schneidkante 10, die um seine zum Wälzschälrad 3 gerichtete vordere Stirnseite 11 umläuft.

Zum Erzeugen des Zahnrads 6 wird der Zahnradrohling 5 in eine hier nicht gezeigte Werkstückeinspannung 12 der Werkzeugmaschine eingespannt.

Der Zahnradrohling 5 wird bevorzugt unverzahnt bereitgestellt, kann aber auch in an sich bekannter Weise mit einer vorgefertigten groben Innenverzahnung versehen sein, die nun hinsichtlich der Geometrie ihrer Zähne 9 mittels des Wälzschälrads 3 spanabhebend fertig bearbeitet wird.

Der mit der Innenverzahnung 4 zu versehende Zahnradrohling 5 wird mittels eines nicht gezeigten Drehantriebs der Werkzeugmaschine in bekannter Weise um eine Werkstückdrehachse Rw mit einer Werkstückdrehzahl Ww gleichläufig zur Drehung des Wälzschälrads 3 drehangetrieben. Das aus der Werkstückdrehzahl Ww und der Werkzeugdrehzahl Wz gebildete Drehzahlverhältnis Wz/Ww beträgt dabei beispielsweise 3:1.

Während der nun folgenden Wälzschälbearbeitung der Zähne 9 des Zahnradrohlings 5 durch das Wälzschälrad 3 ist die Werkstückdrehachse Rw unter einem Achskreuzwinkel Σ', der beispielsweise 20° beträgt, und einem Achsabstand A' in Bezug zur Werkzeugachse Rz ausgerichtet. Dabei befindet sich das Wälzschälrad 3 zu Beginn der Bearbeitung in Achsrichtung auf der der Einspannung der Werkzeugaufnahme 2 zugeordneten Seite des Zahnradrohlings 5 zunächst außerhalb der Innenverzahnung 4. Der Zahnradrohling 5 wird dann in Achsrichtung Xw entlang der Werkstückachse Rw relativ zum in Bezug auf die Achsrichtung seiner Drehachse Rz ruhenden Wälzschälrad 3 verfahren, so dass die Innenverzahnung 4 entlang des Wälzschälrads 3 bewegt wird, bis das Wälzschälrad 3 auf der gegenüberliegenden Seite des Zahnradrohlings 5 wieder aus der Innenverzahnung 4 austritt.

Aufgrund der Relativbewegung, die sich in Folge des Achskreuzwinkels Σ' und der Axialbewegung in Achsrichtung Xz zwischen den miteinander in Kontakt kommenden Zähnen 9 des Wälzschälrads 3 und der Innenverzahnung 4 ergibt, kommt es dabei in an sich bekannter Weise zum Spanabtrag, durch den die Zähne 9 der Innenverzahnung 4 im Bereich ihrer Zahnflanken fertig geformt werden. Die Wälzschälbearbeitung der Innenverzahnung 4 mit dem Wälzschälrad 3 wird fortgesetzt, bis alle Zähne 9 der Innenverzahnung 4 den für diesen Arbeitsgang geltenden Sollvorgaben entsprechend fertig geformt sind.

Nachdem die Erzeugung der Innenverzahnung 4 des Zahnrads 6 durch das Wälzschälrad 3 fertig gestellt ist, wird die Werkzeugaufnahme 2 mit dem Wälzschälrad 3 und dem scheibenförmigen Werkzeug 7 durch eine Bewegung der Werkzeugaufnahme 2 und/oder des Zahnrads 6 in Achsrichtung Xz so ausgerichtet, dass das Werkzeug 7 nahe der der Einspannung der Werkzeugaufnahme 2 zugewandten Stirnseite 6a des Zahnrads 6 angeordnet ist. Zudem wird die Werkzeugaufnahme 2 so verschwenkt, dass die Werkzeugdrehachse Rz in Bezug auf die Werkstückdrehachse Rw unter einem vom Achskreuzwinkel Σ' abweichenden Achskreuzwinkel Σ" ausgerichtet ist, der beispielsweise 10° beträgt. Ebenso wird ein Achsabstand A" zwischen der Werkstückdrehachse Rw und der Werkzeugdrehachse Rz eingestellt, der so bemessen ist, dass die Schneidkante 10 des scheibenförmigen Werkzeugs 7 in radialer Richtung um die gewünschte Spantiefe S gegenüber den Kopfflächen 8 der Zähne 9 der Innenverzahnung 4 in Richtung des Außenumfangs des Zahnrads 6 versetzt angeordnet ist.

Für die folgende Bearbeitung des Kopfkreisdurchmessers rotiert das scheibenförmige Werkzeug 7 ebenfalls gleichläufig zur Drehrichtung Ww des Zahnrads 6 mit einer Drehzahl Wz um seine Werkzeugachse Rz. Das aus der Werkstückdrehzahl Ww und der Werkzeugdrehzahl Wz gebildete Drehzahlverhältnis Wz/Ww beträgt nun beispielsweise 2:1.

Das zahnradförmige Wälzschälrad 3 wird in Achsrichtung Xz durch das Zahnrad 6 über die Breite B der Kopfflächen 8 bewegt, bis seine Schneidkante 10 die Kopfflächen 8 der Zähne 9 vollständig überstrichen hat und dabei von den Kopfflächen 8 einen Span mit der Dicke S abgetragen hat. Dieser Vorgang wird wiederholt, bis alle Kopfflächen 8 der Zähne 9 der Innenverzahnung 4 in entsprechender Weise bearbeitet und der geforderte Kopfkreisdurchmesser der Innenverzahnung 4 erreicht ist.

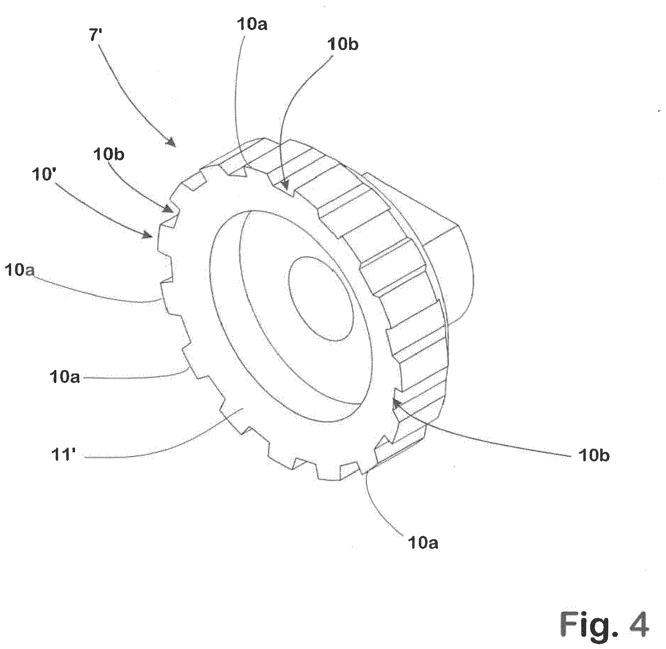

In Fig. 4 ist als Variante des erfindungsgemäß zur Bearbeitung des Kopfkreisdurchmessers eingesetzten scheibenförmigen Werkzeugs 7 ein scheibenförmiges Werkzeug 7' gezeigt, dessen um seine vordere Stirnseite 11' umlaufende Schneidkante 10' segmentiert ist, so dass in regelmäßigem Wechsel und regelmäßigen Winkelabständen Schneidkantensegmente 10a auf Freistellen 10b folgen. Wird das scheibenförmige Werkzeug 7' an Stelle des scheibenförmigen Werkzeugs 7 auf der Werkzeugaufnahme 2 des Kombinationswerkzeugs 1 montiert und in der voranstehend erläuterten Weise für die Bearbeitung des Kopfkreisdurchmessers eingesetzt, so werden nur die Kopfflächen 8 der Zähne 9 der Innenverzahnung 4 spanabhebend bearbeitet, die unter Berücksichtigung des jeweiligen Drehzahlverhältnisses Wz/Ww den Abständen zwischen den Schneidkantensegmenten 10a entsprechend angeordnet sind. Auf diese Weise kann sich die Bearbeitung des Kopfkreisdurchmessers beispielsweise nur auf jeden zweiten oder dritten Zahn 9 der Innenverzahnung 4 beschränken, während die anderen Zähne 9 ungekürzt bleiben.

### BEZUGSZEICHEN

- 1: Kombinationswerkzeug
- 2: Werkzeugaufnahme des Kombinationswerkzeugs 1
- 3: zahnradförmiges Wälzschälrad
- 4: Innenverzahnung des Zahnrads 6
- 5: Zahnradrohling
- 6: Zahnrad
- 6a: der Einspannung der Werkzeugaufnahme 2 zugewandte Stirnseite des Zahnrads 6
- 7,7': scheibenförmiges Werkzeug
- 8: Kopfflächen der Zähne 9 der Innenverzahnung 4
- 9: Zähne der Innenverzahnung 4
- 10,10': Schneidkante des Werkzeugs 7,7'
- 10a: Schneidkantensegmente des scheibenförmigen Werkzeugs 7'
- 10b: Freistellen der Schneidkante 10' des scheibenförmigen Werkzeugs 7'
- 11,11': vordere Stirnseite des scheibenförmigen Werkzeugs 7,7'
- 12: Werkstückeinspannung

- A',A": Achsabstand
- B: Breite der Kopfflächen 8
- Dz: Dicke des scheibenförmigen Werkzeugs
- Rw: Werkstückdrehachse
- Rz: Drehachse Rz des Kombinationswerkzeugs 1 und seines Wälzschälrads 3 sowie scheibenförmigen Werkzeugs 7
- S: Spantiefe
- Ww: Werkstückdrehzahl
- Wz: jeweilige Drehzahl des Kombinationswerkzeugs 1 und seines Wälzschälrads 3 sowie scheibenförmigen Werkzeugs 7
- Xz: Achsrichtung der Werkzeugdrehachse Rz
- Xw: Achsrichtung der Werkstückdrehachse Rw
- Σ',Σ",: Achskreuzwinkel

## Patentansprüche

1. Verfahren zum Bearbeiten des Kopfkreisdurchmessers einer Verzahnung (4) eines Zahnrads (6), bei dem das mit der Verzahnung (4) versehene Zahnrad (6) um eine Werkstückdrehachse (Rw) rotierend angetrieben wird und bei dem mindestens ein Zahn (9) der Verzahnung (4) des Zahnrads (6) mittels eines Werkzeugs (7,7') spanabhebend bearbeitet wird, das um eine in einem Achsabstand (A',A") zur Werkstückdrehachse (Rw) ausgerichtete Werkzeugdrehachse (Rz) rotiert, **dadurch gekennzeichnet, dass** das Werkzeug (7,7') scheibenförmig ist, **dass das** scheibenförmige Werkzeug (7,7') mindestens mit einem als definierte Schneide (10) ausgebildeten Teilsegment (10a) seiner Umfangskante die Kopffläche (8) des jeweils zu bearbeitenden Zahns (9) spanabhebend bearbeitet, **dass** während der spanabhebenden Bearbeitung eine in axialer Richtung der Verzahnung (4) ausgerichtete Relativbewegung zwischen dem Werkzeug (7,7') und dem Zahnrad (6) ausgeführt wird, in Folge derer das Werkzeug (7,7') die zu bearbeitende Kopffläche (8) überstreicht, und **dass** die Werkzeugdrehachse (Rz) in Bezug auf die Werkstückdrehachse (Rw) unter einem Achskreuzwinkel (Σ") ausgerichtet ist, der 5° bis 40° beträgt.

2. Verfahren nach Anspruch 1, **dadurch gekennzeichnet, dass** die während der spanabhebenden Bewegung ausgeführte Relativbewegung dadurch bewirkt wird, dass das scheibenförmige Werkzeug (7,7') längs der Werkzeugdrehachse (Rz) axial von einer Ausgangsposition, die einer ersten Stirnfläche (6a) des Zahnrads (6) zugeordnet ist, in Richtung der zweiten Stirnfläche des Zahnrads (6) bewegt wird.

3. Verfahren nach Anspruch 1, **dadurch gekennzeichnet, dass** die während der spanabhebenden Bewegung ausgeführte Relativbewegung dadurch bewirkt wird, dass das Zahnrad (6) längs der Werkstückdrehachse (Rw) axial von einer Ausgangsposition, die einer ersten Stirnfläche des scheibenförmigen Werkzeugs (7,7') zugeordnet ist, in Richtung der zweiten Stirnfläche des scheibenförmigen Werkzeugs (7,7') bewegt wird.

4. Verfahren nach einem der voranstehenden Ansprüche, **dadurch gekennzeichnet, dass** der Achskreuzwinkel (Σ") mindestens 10° beträgt.

5. Verfahren nach einem der voranstehenden Ansprüche, **dadurch gekennzeichnet, dass** der Achskreuzwinkel (Σ") höchstes 35° beträgt.

6. Verfahren nach einem der voranstehenden Ansprüche, **dadurch gekennzeichnet, dass** die Umfangskante des Werkzeugs (7,7') über ihre gesamte Umfangslänge als definierte Schneide (10) ausgebildet ist.

7. Verfahren nach einem der Ansprüche 1 bis 3, **dadurch gekennzeichnet, dass** um den Umfang der Umfangskante verteilt jeweils Teilsegmente (10a) der Umfangskante als definierte Schneide ausgebildet sind.

8. Verfahren nach einem der voranstehenden Ansprüche, **dadurch gekennzeichnet, dass** während der spanabhebenden Bearbeitung das aus der Drehzahl Wz des scheibenförmigen Werkzeugs (7) und der Drehzahl Ww des Werkstücks (6) gebildete Drehzahlverhältnis Wz/Ww1,1 bis 10 beträgt.

9. Verfahren nach Anspruch 8, **dadurch gekennzeichnet, dass** das Drehzahlverhältnis Wz/Ww 1,1 bis 5 beträgt.

10. Verfahren nach einem der voranstehenden Ansprüche, **dadurch gekennzeichnet, dass** das scheibenförmige Werkzeug (7) und das Werkstück (6) während der spanabhebenden Bearbeitung gleichläufig rotieren.

11. Verfahren nach einem der voranstehenden Ansprüche, **dadurch gekennzeichnet, dass** das scheibenförmige Werkzeug (7) eine achsparallel zur Werkzeugdrehachse (Rz) gemessene Dicke (Dz) von mindestens 1 mm aufweist.

12. Verfahren nach einem der voranstehenden Ansprüche, **dadurch gekennzeichnet, dass** ein Zahnradrohling (5) bereitgestellt wird, an dem mittels Wäizschälen die Verzahnung (4) erzeugt wird, an der anschließend die Bearbeitung der Kopffläche (8) des mindestens einen Zahnes (9) mittels des scheibenförmigen Werkzeugs (7,7') durchgeführt wird.

13. Verfahren nach Anspruch 12, **dadurch gekennzeichnet, dass** ein Wälzschälwerkzeug (3) zum Erzeugen der Verzahnung (4) und das scheibenförmige Werkzeug (7) zur spanabhebenden Bearbeitung der Kopffläche (8) in Achsrichtung (Xz) der Werkzeugdrehachse (Rz) zueinander versetzt gemeinsam auf einer Werkzeugaufnahme (2) befestigt sind.

14. Verfahren nach einem der Ansprüche 12 oder 13, **dadurch gekennzeichnet, dass** sich der während der zur Erzeugung der Verzahnung (4) durchgeführten Wälzschälbearbeitung des Zahnradrohlings eingestellte Achskreuzwinkel (Σ') von dem Achskreuzwinkel (Σ") unterscheidet, unter dem die Werkzeugdrehachse (Rz) während der spanabhebenden Bearbeitung des Werkstücks (6) durch das scheibenförmige Werkzeug (7) in Bezug auf die Drehachse (Rw) des Werkstücks (6) ausgerichtet ist.

15. Kombinationswerkzeug zur Erzeugung eines Zahnrads (6), **dadurch gekennzeichnet, dass** es eine Werkzeugaufnahme (2) umfasst, auf der in Achsrichtung der Werkzeugaufnahme (2) zueinander beabstandet ein Wälzschälwerkzeug (3) zur Erzeugung einer Verzahnung (4) an einem Zahnradrohling (5) und ein scheibenförmiges Werkzeug (7,7') zur Bearbeitung der Kopffläche (8) mindestens eines Zahns (9) der mit dem Wälzschälwerkzeug (3) erzeugten Verzahnung (4) angeordnet sind.
